# EUROPEAN PATENT APPLICATION

(11) **EP 4 036 784 A1**
(43) Date of publication of application: **03.08.2022**
(21) Application number: 22150871.6
(22) Date of filing: 11.01.2022
(51) Int. Cl.: G06F 30/27, G06F 30/28, G06F 113/08

(54) **SIMULATING FLUID FLOW WITH NEURAL NETWORKS**

(30) Priority: 27.01.2021 GB 202101096
(71) Applicant: Rolls-Royce plc, London N1 9FX (GB)
(72) Inventor: Conduit, Bryce, Derby, DE24 8BJ (GB); Wong, Jian Cheng, Derby, DE24 8BJ (GB); Phipps, Anthony, Derby, DE24 8BJ (GB); Zacharzewski, Piotr, Derby, DE24 8BJ (GB); Ooi, Chin Chun, Derby, DE24 8BJ (GB); Qi, Qi, Derby, DE24 8BJ (GB); Wang, Yi, Derby, DE24 8BJ (GB); Dao, Ha My, Derby, DE24 8BJ (GB); Chiu, Pao-Hsiung, Derby, DE24 8BJ (GB)
(74) Representative: Rolls-Royce plc

(57) **Abstract**

A neural network is trained for, and may be used in, the simulation of the fluid flow through a domain around an object geometry. A first training process for the neural network includes training (902) the network on a first set of encodings of pre-computed computational fluid dynamics (CFD) simulations for object geometries and associated boundary conditions. The first training process uses a first loss function that evaluates an error between the network output and the pre-computed CFD simulations. A second training process is then carried out which includes training (905) the network on a second set of encodings of object geometries and associated boundary conditions. The second training process uses a second loss function that evaluates an error between the network output and a set of fluid dynamics conditions.

## Description

### CROSS-REFERENCE TO RELATED APPLICATIONS

This application claims priority from United Kingdom Patent Application No 21 01 096.2 filed January 27, 2021, the whole contents of which are incorporated herein by reference in their entirety.

### TECHNICAL FIELD

This disclosure relates to simulation of fluid flow with neural networks.

### BACKGROUND

Neural networks utilise a plurality of connected nodes to map some input to an output. They are often used in a machine learning context, whereby they are trained to map some input training data to corresponding output data, typically in vector form. Optimisation is achieved by minimising the error between the training data and the output of the network. In some circumstances it is possible to reduce the error to zero. However, this is often not possible due to, for example, scarcity of training data or inaccuracies inherent to the training data.

### SUMMARY

The invention is directed towards methods, instructions, computer-readable media and apparatus for simulating fluid flow through a domain around an object geometry subject to a set of boundary conditions, in which a neural network is utilised. The invention is also directed towards methods, instructions and computer-readable media for training such neural networks.

In an aspect, there is provided a method of training a neural network for use in the simulation of the fluid flow through a domain around an object geometry, the method comprising:
a first training process including training the network on a first set of encodings of pre-computed computational fluid dynamics (CFD) simulations for object geometries and associated boundary conditions, the first training process using a first loss function that evaluates an error between the network output and the pre-computed CFD simulations;
a second training process including training the network on a second set of encodings of object geometries and associated boundary conditions, the second training process using a second loss function that evaluates an error between the network output and a set of fluid dynamics conditions.

In an embodiment, the first training process comprises:
obtaining first training data comprising one or more pre-computed computational fluid dynamic (CFD) solutions, each one of which defines a computed fluid flow through a domain around an object geometry subject to a set of boundary conditions;
deriving the first set encodings from the first training data by generating, for each CFD solution, a first set of domain sample points encoding characteristics of the local object geometry and the local computed fluid flow from the CFD solution;
training the neural network using the first set of encodings;
wherein the first loss function evaluates an error between the neural network output and the first training data at each of the first set of domain sampling points.

In an embodiment, the second training process comprises:
obtaining second training data comprising one or more pre-defined object geometries with associated domain boundary conditions;
deriving the second set of encodings from the second training data by generating, for each object geometry, a second set of domain sample points encoding characteristics of the local object geometry;
training the neural network using the second set of encodings;
wherein the second loss function evaluates an error between the neural network output and a set of fluid dynamics conditions at each of the second set of domain sampling points.

In an embodiment, the second training process further comprises, between the deriving and training steps:
training the neural network using the second set of neural network inputs and a third loss function which evaluates an error between the neural network output and the second training data at each of the second set of domain sampling points.

In an embodiment, the neural network is a feed-forward multilayer perceptron neural network.

In an embodiment, the feed-forward neural network includes rectified linear units.

In an embodiment, the object geometry is a three-dimensional object geometry and the domain is a volume bounding the object geometry.

In an embodiment, the domain sample points are derived by meshing the domain around the object geometry, the mesh defining the domain sample points.

In an embodiment, the characteristics of the local object geometry are encoded for each domain sample point by:
sampling a plurality of nearest-neighbour points, which may be object geometry points or domain boundary points;
applying a weighting to each nearest-neighbour point that is inversely proportional to distance from the domain sample point.

In an embodiment, each one of the plurality of weighted nearest-neighbour points is averaged into a number of bins less than the number of nearest-neighbour points.

In an embodiment, the object geometry is a three-dimensional object geometry and the domain is a volume bounding the object geometry, and the meshing of the domain around the object geometry is performed in three orthogonal planes and characteristics of the local geometry are derived for each of the meshes of each of the three orthogonal planes.

In an embodiment, the training steps comprise an optimisation process which is performed until an exit criterion is satisfied.

In an embodiment, the exit criterion is stagnation of the optimisation process.

In an embodiment, the optimisation process is resilient backpropagation.

In an embodiment, the set of fluid dynamics conditions comprise one or more of:
Navier-Stokes equations;
requirement for energy conservation;
requirement for mass conservation;
requirement for momentum conservation;
requirement to observe wall conditions;
requirement to observe boundary conditions.

In another aspect, there is provided a computer-implemented method of simulating fluid flow through a domain around an object geometry subject to a set of boundary conditions, the method comprising:
deriving a set of neural network inputs by generating a set of domain sample points encoding characteristics of the local object geometry and the boundary conditions;
providing the set of neural network inputs to a neural network trained by the method as recited above to produce a simulated fluid flow through the domain;
outputting the simulated fluid flow through the domain around the object geometry.

### BRIEF DESCRIPTION OF THE DRAWINGS

Embodiments will now be described by way of example only with reference to the accompanying drawings, which are purely schematic and not to scale, and in which:
Figure 1 shows a process for creating a trained neural network and the use thereof for making predictions;
Figure 2 shows apparatus for the training process of Figure 1;
Figure 3 shows apparatus for the prediction process of Figure 1;
Figure 4 shows steps carried out by the encoder of Figure 2;
Figure 5 shows steps carried out to process object geometries;
Figures 6A, 6B, 6C, and 6D show processed object geometries;
Figure 7 shows the process of generating the encodings for an input object geometry;
Figures 8A and 8B show the process of characterising the local environment of a domain sample point;
Figures 9A and 9B show the first training processes for the neural network;
Figure 10 shows the second training processes for the neural network;
Figure 11 shows steps carried out to evaluate a component of the loss function used in the second training process;
Figure 12 shows steps carried out to evaluate another component of the loss function used in the second training process;
Figure 13 shows steps carried out to evaluate another component of the loss function used in the second training process; and
Figure 14 shows steps carried out to use the trained neural network for simulating fluid flow through a domain around an object geometry subject to a set of boundary conditions.

### DETAILED DESCRIPTION

### Figure 1

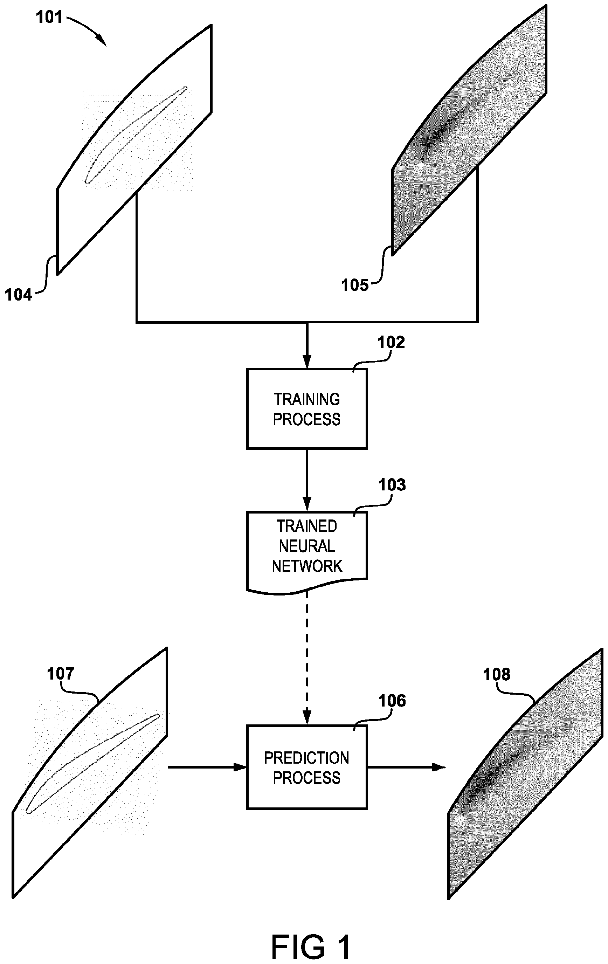

An overview of the process for creating a trained neural network and the use thereof is shown in Figure 1.

First, training data 101 is provided to a training process 102 to produce a trained neural network 103. In this example, the training data 101 comprises a set of exemplar input object geometries 104 bounded within a domain and having boundary conditions associated therewith. As used herein, the term object geometry refers to the shape or configuration of an object, howeverso represented in terms of data structure. For example, the object may be stored as a polygon mesh, as a signed distance field, as an implicit function or as a point cloud, or any other way of defining the shape or configuration of an object.

In the present embodiment, the exemplar input object geometries 104 are of the type typically used with conventional computational fluid dynamics (CFD) codes and methods. Accompanying the exemplar input object geometries 104 are a set of pre-computed CFD simulations 105 corresponding to a subset of the exemplar input object geometries 104. In the present embodiment, the pre-computed CFD simulations 105 are pre-computed by performing a conventional CFD run on a subset of the input object geometries 104 using the corresponding domain and boundary condition definitions associated therewith.

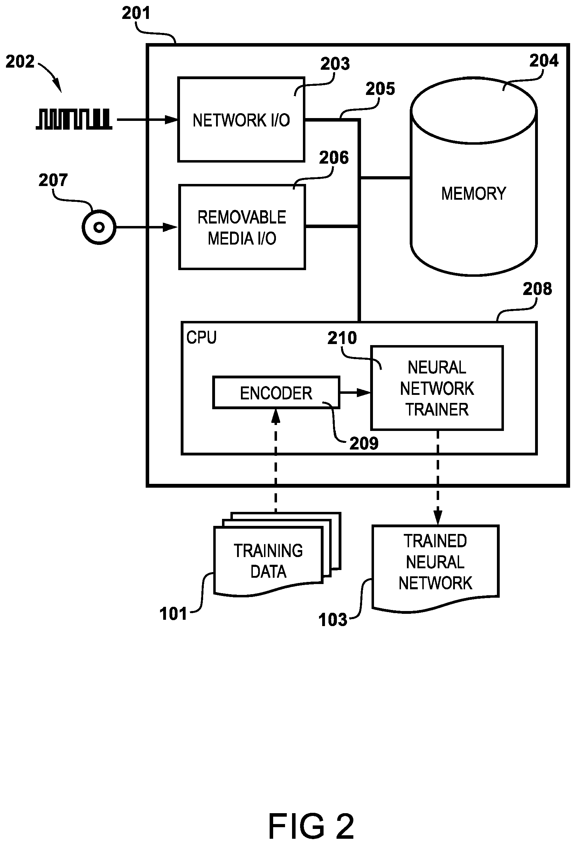

In operation, the training process 102 uses the training data 101 to produce the neural network 103 for use in the simulation of the fluid flow through a domain around an object geometry. This process will be described further with reference to Figure 2.

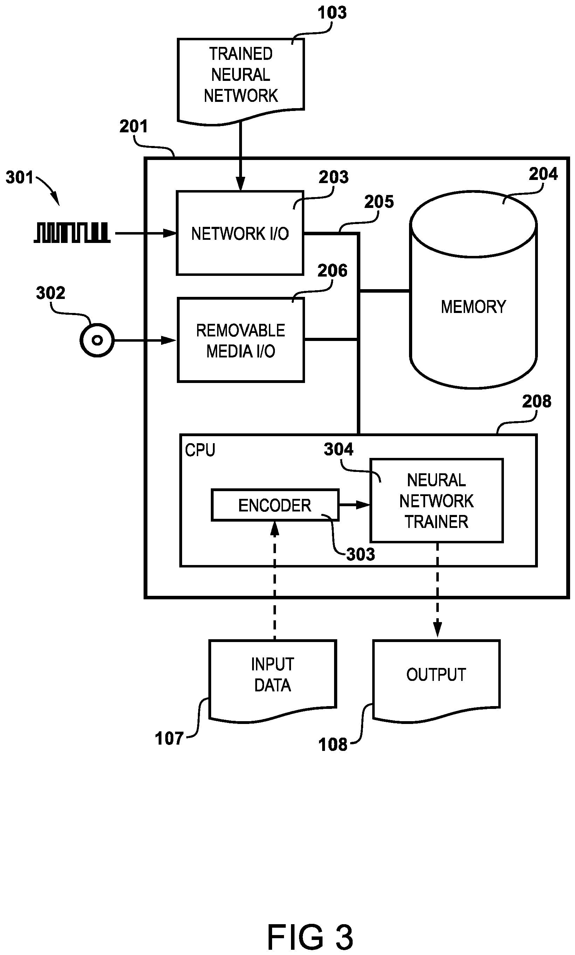

Once the training process 102 is complete, the trained neural network 103 may be disseminated for use in a prediction process 106, whereby a novel input object geometry 107, again bounded within a domain and having boundary conditions associated therewith, is processed to produce an output 108. The prediction process 106 will be described further with reference to Figure 3.

It will be appreciated that conventional CFD processing to produce for example the set of pre-computed CFD simulations 105 is highly computationally intensive, with runs often taking hours or even days even on high performance computing clusters. By contrast, the prediction process 106 has been shown to produce outputs 108 in around 1 second at greater than 95 percent accuracy, for example 99 percent, when compared to the CFD simulation of the same input object geometry.

### Figure 2

Apparatus for the training process 102 is shown in Figure 2. In the present embodiment the apparatus is a workstation computer 201, but in alternative embodiments a server or even virtualised computer could be used.

In this embodiment, computer-readable training process instructions 202 may be received from a network location, possibly on the Internet, via a network interface 203. The instructions 202 are then transferred to memory 204 via an internal bus 205. Alternatively, the instructions may be transferred into memory via a removable media interface 206 configured to read the instructions from a non-transitory computer-readable medium such as a CD-ROM 207, or alternatively from Flash storage etc.

In the present embodiment, when the instructions 202 are invoked, processes are established on the central processing unit 208 for training a neural network and allocated a partition of memory. As used herein, memory refers to all tiers of memory in the computer 201, and thus includes high-speed cache in the CPU 208, along with random access memory and non-volatile storage. In the present embodiment, processing is performed on a CPU however it will be appreciated that in alternative embodiments individual processing routines may be performed on a graphics processing unit (GPU) to utilise the extreme level of parallelism in their architecture. It is further contemplated that alternative specialised hardware could be used to accelerate processing, for example use of dedicated neural network accelerator cards possibly using field-programmable gate array (FPGA) or application-specific integrated circuit (ASIC) hardware.

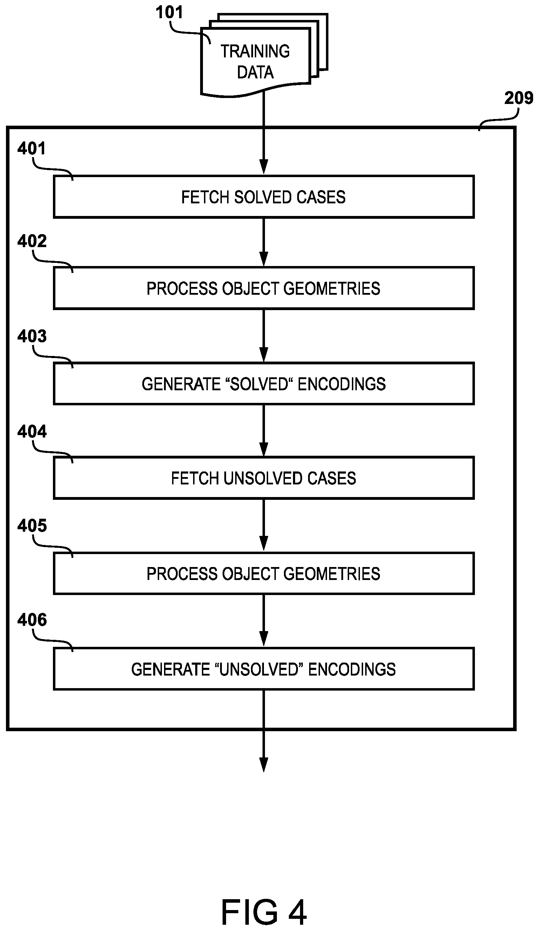

In the present embodiment two processes are spawned: an encoder 209 and a neural network trainer 210. It will be appreciated that the actual architecture of the processes may differ - there could be one monolithic process or more than two depending on compiler optimisations, for example. As will be described further with reference to Figure 4, the encoder 209 is configured to receive exemplar input object geometries 104 (loaded into memory 204 via the network interface 203, for example) and to produce a set of encodings characterising the object geometry and additionally, for the subset for which pre-computed CFD simulations 105 exist, the local computed fluid flow. In other words, the encoder 209 produces a set of embeddings for the exemplar input object geometries 104, or alternatively it may equally be said that it performs dimensionality reduction on the input data.

The output of the encoder 209 is provided to the neural network trainer 210, which performs a first training process on a neural network to produce the trained neural network 103. The trained neural network 103 may be saved to memory 204, distributed via the network interface 203, or encoded on a computer-readable medium such as a CD-ROM or Flash storage etc. using the removable media interface 202.

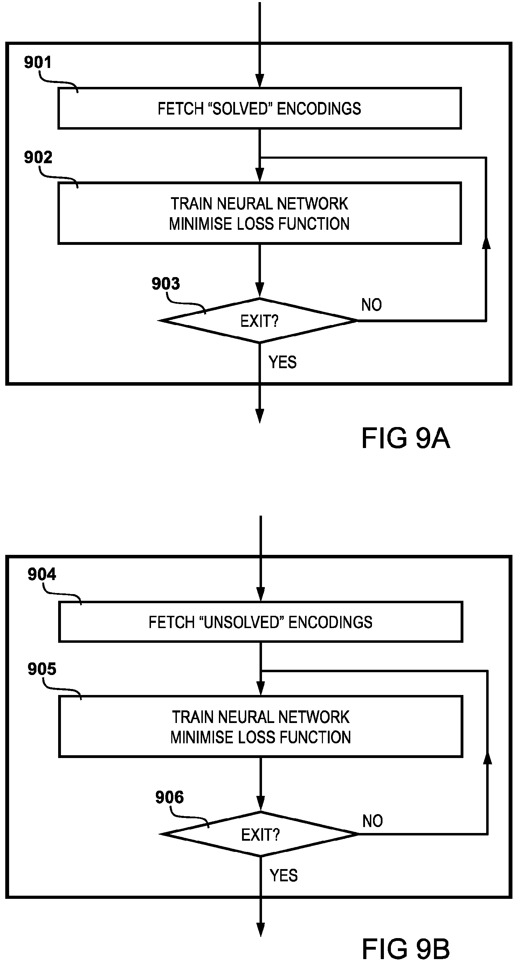

In the first training process, the network is trained by minimising the error between the output of the network given the input, and the pre-computed CFD simulations of the domain. This process will be described further with reference to Figure 9A. The neural network trainer 210 is then configured to perform a second training process, which involves minimising the error between the output of the network given the input and a set of fluid dynamics conditions evaluated over the domain. In the present embodiment, the fluid dynamics conditions are one or more of the set of equations describing the physics of fluid flow. In particular, they comprise one or more of the Navier-Stokes equations, the requirement for energy conservation, the requirement for mass conservation, the requirement to observe wall conditions, and the requirement to observe boundary conditions.

### Figure 3

Apparatus for the prediction process 106 is shown in Figure 3. In the present embodiment the apparatus is the same workstation computer 201 as shown in Figure 2. However, in alternative embodiments, it could be a different computer, a server or a virtualised computer, etc.

In this embodiment, computer-readable prediction process instructions 301 may be received from a network location, possibly on the Internet, via the network interface 203. The instructions 301 are then transferred to memory 204 via an internal bus 205. Alternatively, the instructions 301 may be transferred into memory via a removable media interface 206 configured to read the instructions from a non-transitory computer-readable medium such as a CD-ROM 302, or alternatively from Flash storage etc.

In the present embodiment, when the instructions 301 are invoked, processes are established on the central processing unit 208 for utilising the trained neural network 103 and allocated a partition of the memory 204. Again, in the present embodiment, processing is performed on a CPU however it will be appreciated that in alternative embodiments individual processing routines may be performed on a graphics processing unit (GPU) to utilise the extreme level of parallelism in their architecture. It is further contemplated that alternative specialised hardware could be used to accelerate processing, for example use of dedicated neural network accelerator cards which use FPGA or ASIC hardware processing.

In the present embodiment two processes are spawned: an encoder 303 and a neural network processor 304. The encoder 303 is substantially the same as encoder 209, and hence details of its operation will be described with reference to Figure 4. The encoder 303 is thus configured to produce a set of encodings from an input object geometry 107 per Figure 1, which are then provided to the neural network processor 304.

The neural network processor 304 is configured to subject the encodings received from the encoder 303 to the defined mathematical operations of the trained neural network 103 and to hence produce the output 108. This approach to using a trained neural network for predictions will be familiar to those skilled in the art.

### Figure 4

Steps carried out by the encoder 209 are set out in Figure 4.

As described previously, the training data 101 comprises a set of exemplar input object geometries 104. A subset of these geometries have corresponding pre-computed CFD simulations 105 for their boundary conditions (hereinafter "solved cases"). The remainder of the exemplar input object geometries 104 have boundary conditions but do not have corresponding pre-computed CFD simulations (hereinafter "unsolved cases").

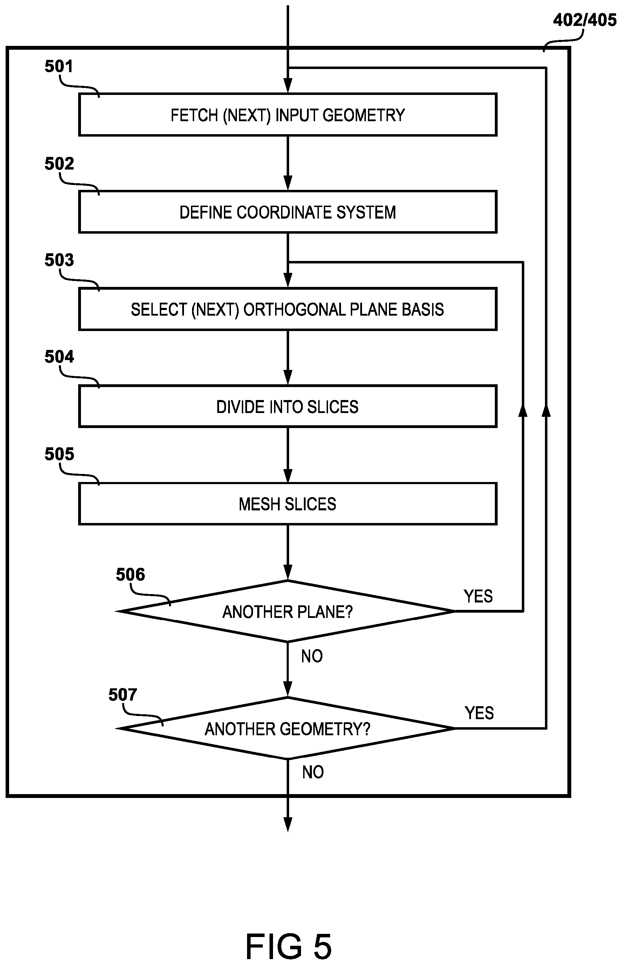

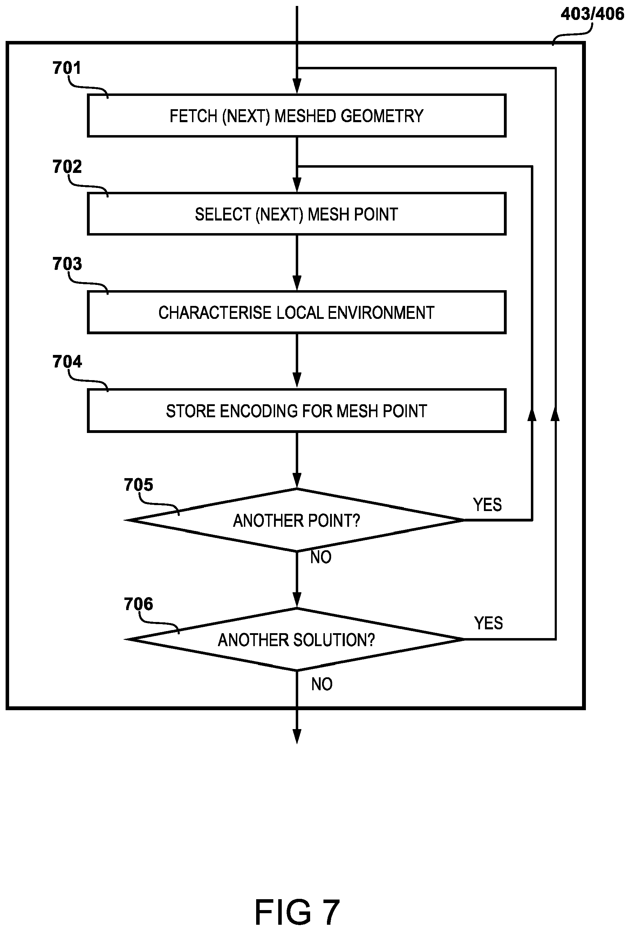

The encoder 209 begins at step 401 by fetching the exemplar input object geometries 104 and the pre-computed CFD solutions 105 of the solved cases. Then, at step 402, the encoder 209 processes the object geometries. This process will be described with reference to Figure 5. The encoder 209 then generates a set of solved encodings at step 403, which process will be described with reference to Figure 7.

The encoder 209 then fetches the exemplar input object geometries 104 of the unsolved cases at step 404. Then, at step 405, the encoder 209 processes the object geometries, again using the process set out in Figure 5, and then generates a set of unsolved encodings at step 406 using the process set out in Figure 7.

### Figure 5

Steps carried out to process the object geometries in steps 402 and 405 are set out in Figure 5.

At step 501, an input object geometry is fetched from memory 204, and at step 502 the coordinate system is defined. In the present embodiment, the input object geometries are three-dimensional object geometry and the domain is a volume bounding the object geometry within a coordinate space of dimension 3. Depending on the nature of the problem, the coordinate system may be defined with a Cartesian coordinates (*x,y,z*) suitable for modelling irregular cases such as for example an air inlet duct or a heat exchanger. Alternatively, for cases such as rotating turbomachinery, a cylindrical coordinate system (*r,θ,z*) could be defined. Any other suitable coordinate system could be used. Furthermore, it is contemplated that the input object geometries could instead be two-dimensional geometries within a coordinate space of dimension 2, with the domain being an area bounding the object geometry. Again, a Cartiesian (*x,y*) or polar (*r,θ*) coordinate system could be defined depending upon the characteristics of the input object geometries.

In an embodiment, step 502 may comprise a preliminary process of mapping the input object geometry and domain from their initial coordinate space of dimension m to a different coordinate space of dimension n, which could be larger than m, for example n = m + 1, or n = m², etc. This may assist the neural network in learning as complex features in lower dimensional spaces can become simplified in higher dimensional spaces.

In the present embodiment, a Cartesian coordinate system (*x,y,z*) is defined over the domain, which is within a coordinate space of dimension 3.

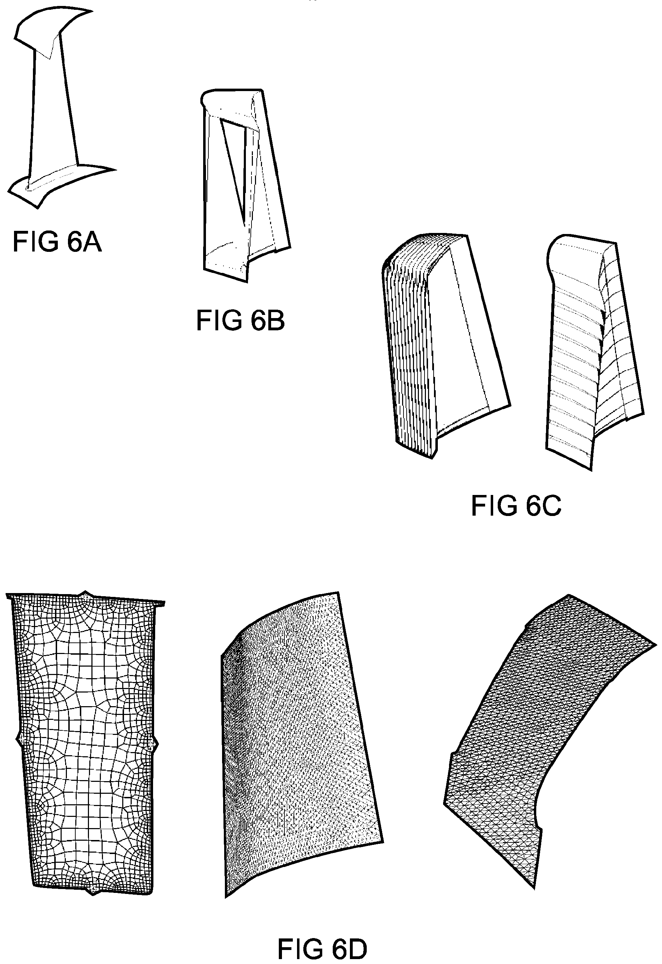

At step 503, one of the three mutually orthogonal directions of the coordinate system is selected, and at step 504 the geometry is divided into slices normal to the selected direction. The slices are then meshed at step 505. Any suitable meshing algorithm may be used. An example of these steps will be described with reference to Figures 6A to 6D.

The meshed slices define the domain sample points at which the fluid flow through the domain will be sampled. In the present embodiment, the domain sample points are the nodes of the mesh, but alternatively it could be the geometric centre of the mesh cells or any other point defined by the mesh.

At step 506, a question is asked as to whether another orthogonal plane remains for selection. If so, control returns to step 503 where the next orthogonal plane is selected, and the geometry divided into slices which are then meshed. If all planes have been processed, then a further question is asked at step 507 as to whether another geometry remains for processing. If answered in the affirmative, then control returns to step 501. If the question asked at step 507 is answered in the negative, then all input object geometries have been processed and step 402 or 405 as the case may be, is complete.

In the present embodiment, the slice and mesh approach is used to reduce the total memory requirements, however a full three-dimensional mesh of the domain could be created instead if sufficient resources allow and/or the geometry is simple enough.

### Figures 6A, 6B, 6C & 6D

Figure 6A shows an exemplary object which in this case is a turbomachine blade extending between an inner annulus and an outer annulus. CFD would tend to be performed on the volume through which a fluid (in this example, air) would flow, and hence in this example the input object geometry would take the form of a blade passage made up of the suction side of one blade, and the pressure side of another blade as shown in Figure 6B

Example slices taken normal to orthogonal directions are shown in Figure 6C.

Examples of orthogonal slices following meshing are shown in Figure 6D.

### Figure 7

The process of generating the encodings for the input object geometry at steps 403 and 406 is set out in Figure 7.

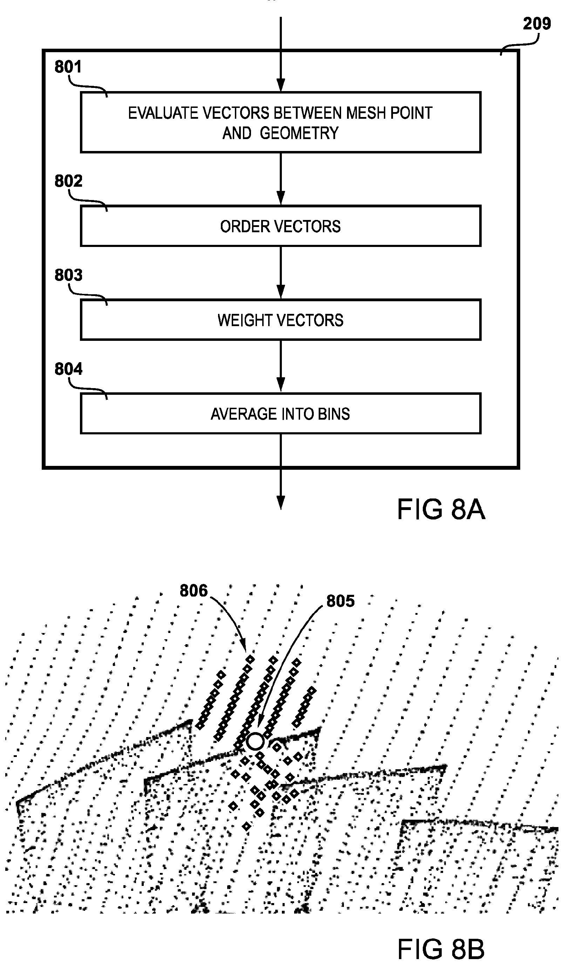

At step 701, a processed object geometry from step 402 or step 405 is obtained. The meshes for every slice are loaded, and at step 702 a domain sample point is selected. At step 703, the local environment of the selected domain sample point is characterised. In an embodiment, this comprises creating a distance field around the domain sample point to the object geometry to create a plurality of sample points of the geometry. A method of doing this will be described with reference to Figure 8A, with an example image shown in Figure 8B of the resulting sample points. The output of step 703 is then an encoding of the local environment for each domain sample point, which is stored at step 704.

Recalling that the slices and hence the meshes thereof exist in the flow domain around the object geometry, this means that for the solved cases the flow conditions at the domain sample point under considerations are then associated with a particular geometric configuration. In this way, it is possible for the neural network to learn the geometric configurations which give rise to particular flow structures. For the unsolved cases, it allows the network to learn the boundary conditions associated with an overall combination of geometric features, and to learn the physical fluid dynamics conditions that must be observed for a given combination of local geometric features.

After storing the encoding for the domain sample point, a question is asked at step 705 as to whether any other domain sample point remains. If so, then control returns to step 703 where the next domain sample point is selected. If not, then a further question is asked at step 706 as to whether another case remains for processing. If so, control returns to step 701 where the processed object geometry from the next case is fetched. Alternatively, the question asked at step 706 is answered in the negative and hence the process of generating the encodings is complete.

### Figures 8A & 8B

As described previously, the local environment for each domain sample point is characterised to generate an encoding at step 703. Details of this step are set out in Figure 8A.

First, the encoder 209 evaluates a set of nearest-neighbour vectors between the selected domain sample point and a plurality of nearest-neighbour points of the object geometry and the domain boundary at step 801. At step 802, the vectors are ordered by distance. In a specific embodiment, this step utilises the cKDTree algorithm. At step 803, the vectors are weighted according to their distance from the domain sample point. In a specific embodiment, each vector is weighted inversely proportionally to its magnitude, since the generalized potential energy between two points in a field is proportional to the inverse of the separation distance. At step 804, the weighted vectors are then averaged into a set of bins. In the present embodiment the number of bins is less than the number of vectors. Hence, the vectors are combined in accordance to their potential aerodynamic effect, and thus averaged out geometric features closer to the domain sample point are interpreted as being more closely correlated with the formation of a particular flow structure in the domain.

In an alternative embodiment, a spatial convolution approach can be used for the weighting process. In another alternative embodiment, a graph could be created from the local geometry around the domain sample point and used in conjunction with a graph neural network to produce a lower-dimensional encoding of the salient geometric features.

Figure 8B illustrates a domain sample point 805 with a collection of geometry sample points 806 therearound. The encoder evaluates the vectors between the domain sample point 805 and each geometry sample point 806 at step 801. The overall result of step 703 is that an encoding of the local environment around the domain sample point 805 is produced which will be inputted into the neural network for either training or prediction.

### Figures 9A & 9B

The training process carried out by the neural network trainer is shown in Figure 9A.

At step 901, the encodings produced in step 402 are fetched. A new neural network is then established and trained at step 902 using the encodings for the solved cases and the pre-computed CFD simulations. The training process uses a loss function that evaluates the error between the network output in terms of fluid flow characteristics at each domain sample point and the pre-computed CFD simulations, in combination with an optimiser algorithm that adjusts the properties of the neural network to minimise the loss function.

In the present embodiment, the neural network is a feedforward multilayer perceptron neural network. In a specific embodiment, the layers are selected to be rectified linear units as these are trained in fewer epochs due to a constant gradient and greater stability than other types. In this specific embodiment the loss function selected is the MSELoss function, which is a mean square error-based loss function. Alternatively, the SmoothL1Loss function could be used instead, which outputs the mean square error at high error values, and a proportional error at lower values. The optimiser algorithm used in this specific embodiment is the AdamW algorithm, which is a type of gradient-based optimisation algorithm. It has been selected as it has been found to be the most efficient optimiser in this scheme. It will be appreciated that other algorithms could be used instead, for example stochastic gradient descent.

After each optimiser step, a question is asked at step 903 as to whether the exit criteria are fulfilled for the training process. In the present embodiment, as step 902 is the initialisation of the neural network, the exit criteria is the accuracy of the neural network with respect to the solved encodings and associated pre-computed CFD simulations. In an alternative embodiment, the exit criteria could be stagnation (i.e. no change in the network following an optimiser step) or number of epochs (i.e. a maximum number of training and optimisation iterations).

If the exit criteria are not yet fulfilled, control returns to step 902 whereupon a further training and optimisation iteration is carried out. If the exit criteria are fulfilled, then the training process using the solved cases is complete and proceeds to training with the unsolved cases.

In an embodiment, it is possible to further initialise the neural network using the unsolved cases' encodings and boundary conditions. Hence as shown in Figure 9B a further initialisation routine may be performed, in which at step 904 the unsolved encodings are loaded along with their boundary condition data. At step 905 the neural network is trained using the unsolved encodings, whereby the error between the output boundary conditions and input boundary conditions are minimised. In this example, the boundary conditions for example include inlet and outlet conditions, but also boundary layer and wall properties. In the present example the optimiser is the same as for step 902. Hence after each optimiser step, a question is asked at step 906 as to whether the exit criteria have been fulfilled, as with step 903. If not, step 905 is repeated. If so, then the initialised network is stored.

### Figure 10

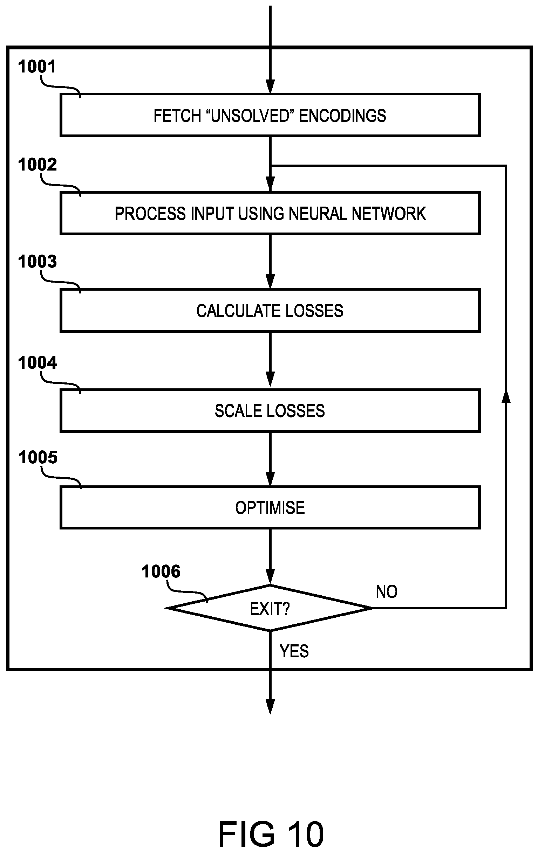

The initialised network is then further trained by evaluating fluid dynamics conditions over the domain sample points of the unsolved encodings. Steps associated with this process are set out in Figure 10.

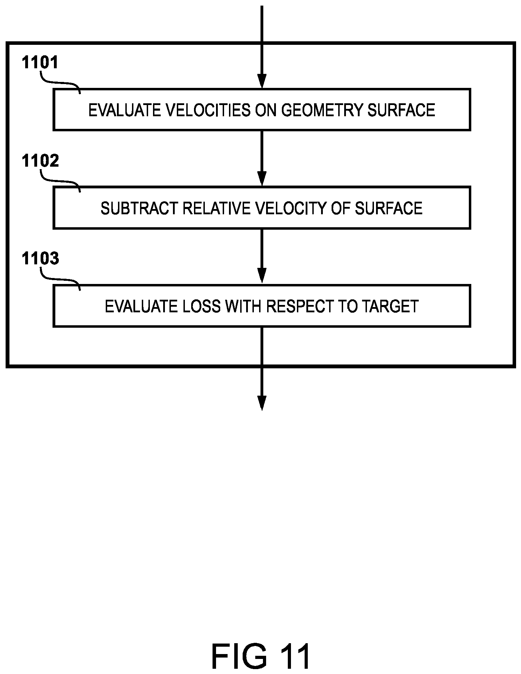

At step 1001, the unsolved encodings are loaded, and at step 1002 they are provided to the initialised neural network to produce a prediction of the flow conditions at the domain sample points. Then, at step 1003, a loss function is evaluated which calculates the error between the network output and a set of fluid dynamics conditions at the domain sample points. In the present embodiment, the set of fluid dynamics conditions comprise testing for compliance with boundary conditions and wall conditions, compliance with the Navier-Stokes equations, and compliance with the conservation requirements such as mass, energy, and momentum. Steps to carry out the testing of fluid dynamics conditions will be described further with reference to Figures 11 to 13.

After evaluation of the loss function, the losses are scaled at step 1004. In the present embodiment, this is performed to improve stability of the process. In a specific embodiment, the coefficients for the scaling of the network losses are derived using a second neural network which optimises the coefficients until sufficient accuracy is achieved.

Once the loss function has been evaluated, an optimiser step is performed at step 1005. In the present embodiment, the Rprop (resilient backpropagation) optimiser is used as it responds well to the sharp changes in gradients typically found with multiple sources of loss. In an alternative embodiment, the AdamW optimiser could be used.

Once the optimisation step has been performed, a question is asked at step 1006 as to whether the exit criteria are fulfilled. In this embodiment, stagnation of the process (i.e. a finite number of iterations with no improvement) is selected as the exit criteria. This is chosen as goodness of fit is the objective of this part of the training process.

If the exit criteria have not yet been satisfied, control returns to step 1002 where the optimisation process is repeated. If the exit criteria are met, then the network is output as the trained network 103.

### Figure 11

Steps carried out in step 1003 out to evaluate the boundary conditions component of the loss function are set out in Figure 11.

At step 1101, flow velocities on domain sample points that are on geometry surfaces are evaluated. At step 1102, the relative velocity of the surface is subtracted. This caters for cases where a geometry is being simulated as moving in a flow, for example a turbomachine rotor blade, or for inlet and outlet planes where the velocity may be non-zero. At step 1103, the loss with respect to target is evaluated. In this embodiment, the target is zero at all surfaces. Hence, if the output of the neural network after correction for surface relative velocity is non-zero, this component of the loss function will be evaluated as non-zero and hence will contribute to the corrections implemented by the optimisation step 1005.

### Figure 12

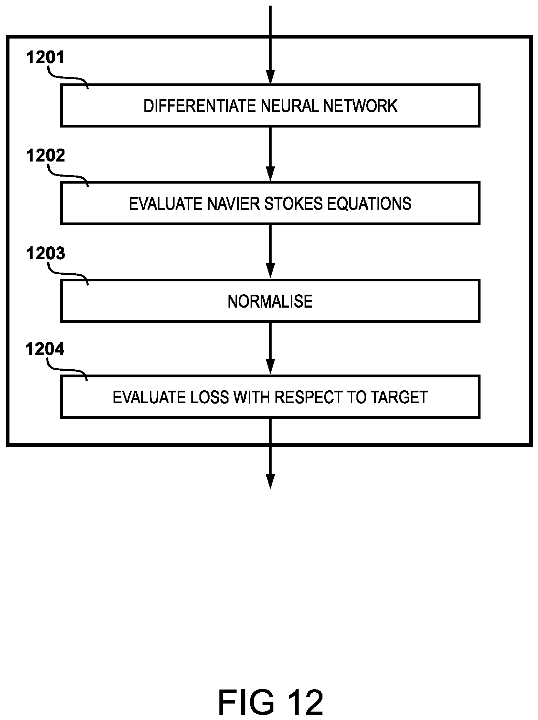

Steps carried out in step 1003 out to evaluate Navier-Stokes equation component of the loss function are set out in Figure 12.

At step 1201, the neural network is differentiated in this embodiment using the autograd algorithm. This provides the required indices to insert into the massflow, momentum and energy Navier-Stokes equations which are then evaluated for the domain sample points at step 1202. In an embodiment a subset of the total domain sample points may be considered depending on the amount of system memory available.

At step 1203, a normalisation process is applied in this embodiment to the Navier-Stokes output. In an embodiment, this involves dividing by the maximum residual value. In another embodiment, the normalisation process comprises a non-dimensionalisation of the output. Such processes will be familiar to those skilled in the art.

At step 1204, the loss is evaluated with respect to the target. As with step 1103, the target in this embodiment is zero, i.e. output of step 1202 should ideally be zero everywhere.

### Figure 13

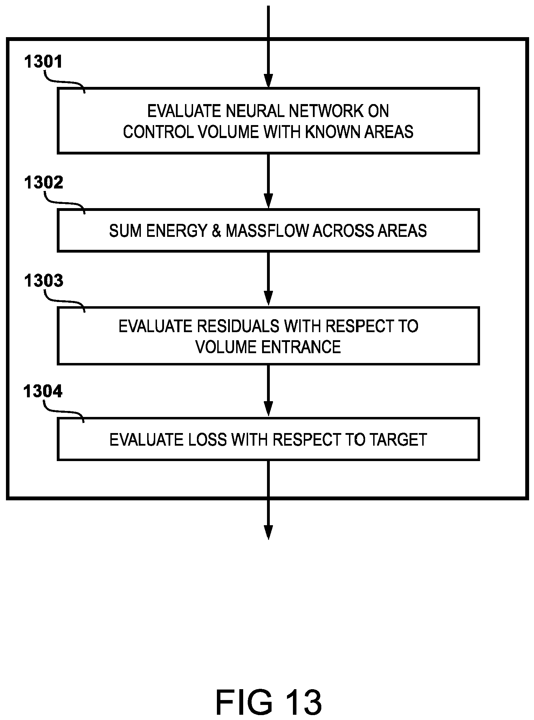

Steps carried out in step 1003 out to evaluate the conservation components of the loss function are set out in Figure 13.

At step 1301, the output of the neural network is evaluated for a known control volume in the domain where the areas in the three orthogonal axes are known. At step 1032, the sum of energy and mass flow is evaluated for each of the orthogonal areas of the control volume. The residuals are then evaluated with respect to the entrance to the control volume at step 1303. The loss with respect to a target value is then evaluated at step 1304. In the present embodiment this target value is zero, as there should be no difference in energy and mass through the control volume.

### Figure 14

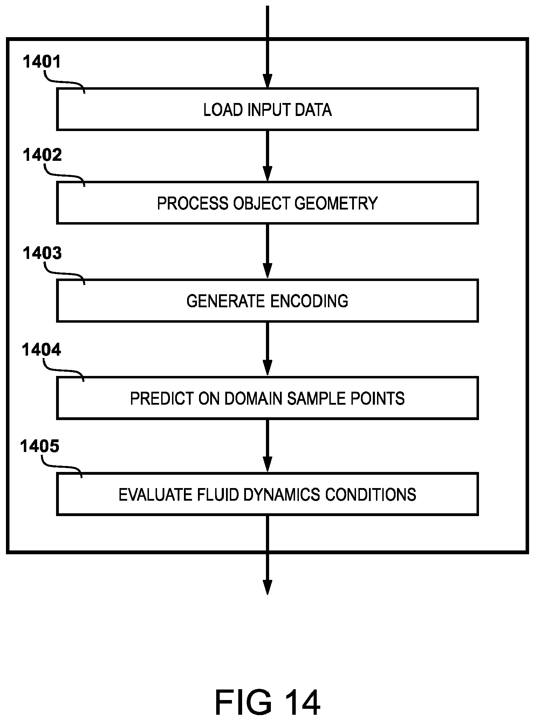

When the training process is complete, the trained neural network 103 may be made available for use by the prediction process 106 from the memory 204. Steps carried out by the encoder 303 and the neural network processor 304 to produce a prediction are set out in Figure 14.

At step 1401, the input data 107 is loaded, and at step 1402 the input object geometry is process as per the steps set out in Figure 5. The processed object geometry is then converted to an input set of encodings by the encoder 303 at step 1403. At step 1404, the input set of encodings are provided to the neural network processor 304 to predict on the domain sample points using the trained neural network 103. This then produces the output 108. In the present embodiment, an additional step 1405 of evaluating the fluid dynamics conditions as per the step 1003 is carried out. The evaluation of the loss function in respect of the output 108 facilitates an assessment of the accuracy of the output 108 against the fluid dynamics conditions imposed on it.

Various examples have been described, each of which comprise various combinations of features. It will be appreciated by those skilled in the art that, except where clearly mutually exclusive, any of the features may be employed separately or in combination with any other features and the invention extends to and includes all combinations and subcombinations of one or more features described herein.

## Claims

1. A method of training a neural network for use in the simulation of the fluid flow through a domain around an object geometry, the method comprising:
a first training process including training the network on a first set of encodings of pre-computed computational fluid dynamics (CFD) simulations for object geometries and associated boundary conditions, the first training process using a first loss function that evaluates an error between the network output and the pre-computed CFD simulations;
a second training process including training the network on a second set of encodings of object geometries and associated boundary conditions, the second training process using a second loss function that evaluates an error between the network output and a set of fluid dynamics conditions.

2. The method of claim 1, in which the first training process comprises:
obtaining first training data comprising one or more pre-computed computational fluid dynamic (CFD) solutions, each one of which defines a computed fluid flow through a domain around an object geometry subject to a set of boundary conditions;
deriving the first set encodings from the first training data by generating, for each CFD solution, a first set of domain sample points encoding characteristics of the local object geometry and the local computed fluid flow from the CFD solution;
training the neural network using the first set of encodings;
wherein the first loss function evaluates an error between the neural network output and the first training data at each of the first set of domain sampling points.

3. The method of claim 1 or claim 2, in which the second training process comprises:
obtaining second training data comprising one or more pre-defined object geometries with associated domain boundary conditions;
deriving the second set of encodings from the second training data by generating, for each object geometry, a second set of domain sample points encoding characteristics of the local object geometry;
training the neural network using the second set of encodings;
wherein the second loss function evaluates an error between the neural network output and a set of fluid dynamics conditions at each of the second set of domain sampling points.

4. The method of claim 2, in which the second training process further comprises, between the deriving and training steps:
training the neural network using the second set of neural network inputs and a third loss function which evaluates an error between the neural network output and the second training data at each of the second set of domain sampling points.

5. The method of any preceding claim, in which the neural network is a feedforward multilayer perceptron neural network,, optionally including rectified linear units.

6. The method of any preceding claim, in which the object geometry is a three-dimensional object geometry and the domain is a volume bounding the object geometry.

7. The method of any one of claims 2 to 4, in which the domain sample points are derived by meshing the domain around the object geometry, the mesh defining the domain sample points.

8. The method of claim 5, in which the characteristics of the local object geometry are encoded for each domain sample point by:
sampling a plurality of nearest-neighbour points, which may be object geometry points or domain boundary points;
applying a weighting to each nearest-neighbour point that is inversely proportional to distance from the domain sample point.

9. The method of claim 8, in which each one of the plurality of weighted nearest-neighbour points is averaged into a number of bins less than the number of nearest-neighbour points.

10. The method of any one of claims 7 to 9, in which the object geometry is a three-dimensional object geometry and the domain is a volume bounding the object geometry, and the meshing of the domain around the object geometry is performed in three orthogonal planes and characteristics of the local geometry are derived for each of the meshes of each of the three orthogonal planes.

11. The method of any preceding claim, in which the training steps comprise an optimisation process which is performed until an exit criterion is satisfied,
optionally wherein the exit criterion is stagnation of the optimisation process,
optionally wherein the optimisation process is resilient backpropagation.

12. The method of any preceding claim, in which the set of fluid dynamics conditions comprise one or more of:
Navier-Stokes equations;
requirement for energy conservation;
requirement for mass conservation;
requirement for momentum conservation;
requirement to observe wall conditions;
requirement to observe boundary conditions.

13. A computer-implemented method of simulating fluid flow through a domain around an object geometry subject to a set of boundary conditions, the method comprising:
deriving a set of neural network inputs by generating a set of domain sample points encoding characteristics of the local object geometry and the boundary conditions;
providing the set of neural network inputs to a neural network trained by the method of any one of claims 1 to 15 to produce a simulated fluid flow through the domain;
outputting the simulated fluid flow through the domain around the object geometry.

14. A computer-readable medium having computer-executable instructions encoded thereon which, when executed by the computer, cause the computer to perform the method of any one of claims 1 to 13.

15. A computer-readable medium having stored thereon a neural network produced by the method of any one of claims 1 to 13.
